# EUROPÄISCHE PATENTSCHRIFT

(11) **EP 0 523 208 B1**
(45) Veröffentlichungstag und Bekanntmachung des Hinweises auf die Patenterteilung: **23.10.1996**
(21) Anmeldenummer: 92903145.8
(22) Anmeldetag: 29.01.1992
(51) Int. Cl.: C22B 43/00, C22B 9/02, H01J 9/00, C09K 11/01, B09B 3/00

(54) **VERFAHREN UND EINRICHTUNG ZUR ABFALLVERWERTUNG VON METALL- BZW. METALLDAMPFHALTIGEN GEGENSTÄNDEN**
PROCESS AND DEVICE FOR RECYCLING ARTICLES CONTAINING METALS OR METAL VAPOURS
PROCEDE ET DISPOSITIF DE RECUPERATION DE DECHETS FORMES D'OBJETS CONTENANT DES METAUX OU DES VAPEURS METALLIQUES

(30) Priorität: 01.02.1991 DE 4102972
(43) Veröffentlichungstag der Anmeldung: 20.01.1993
(73) Patentinhaber: UBIB UNTERNEHMENSBERATUNG GMBH, D-89186 Illerrieden (DE)
(72) Erfinder: KÖHLER, Antonius, D-5270 Gummersbach (DE)
(74) Vertreter: Döring, Wolfgang, Dr.-Ing. Patentanwälte Hauck, Graalfs, Wehnert, Döring, Siemons
(86) Internationale Anmeldenummer: DE9200055
(87) Internationale Veröffentlichungsnummer: WO9213976

(56) Entgegenhaltungen:
- EP-A- 0 298 035
- DE-A- 3 412 767
- DE-A- 3 909 380
- DE-C- 3 917 412
- GB-A- 2 089 335

## Beschreibung

Die vorliegende Erfindung betrifft ein Verfahren zur Abfallverwertung von metall- bzw. metalldampfhaltigen Gegenständen, insbesondere quecksilberdampfhaltigen Lampen, gemäß dem Oberbegriff des Patentanspruchs 1. Sie ist ferner auf eine Einrichtung zur Durchführung eines derartigen Verfahrens gemäß dem Oberbegriff des Patentanspruchs 10 gerichtet.

Bei den hier in Rede stehenden Gegenständen handelt es sich primär um sogenannte Entladungslampen, die im Gegensatz zu Glühlampen und Halogenlampen aus physikalischen Gründen zur Lichterzeugung Metalldämpfe, beispielsweise Quecksilberdampf, benötigen. Für allgemeine Beleuchtungszwecke werden folgende Entladungslampen verwendet: Leuchtstofflampen, einschließlich Kompakt-Leuchtstofflampen, Quecksilberdampf-Hochdrucklampen, Hetallhalogendampflampen, Natriumdampf-Hochdrucklampen. Derartige Entladungslampen stellen nach den Gesetzen der Bundesrepublik Deutschland Sonderabfall dar und bedürfen einer speziellen Entsorgung. Zur Durchführung einer derartigen speziellen Entsorgung sind in der Vergangenheit aufwendige Maßnahmen erforderlich gewesen. Desweiteren fallen unter derartige Gegenstände beispielsweise Thermometer, elektrische Schalter. Die Erfindung betrifft jedenfalls die Abfallverwertung jeglicher Gegenstände, die umweltschädliche Metalle bzw. Metalldämpfe enthalten.

In der EP-A-298 035 sind ein Verfahren und eine Einrichtung mit den Merkmalen der Oberbegriffe der Patentansprüche 1 und 10 beschrieben. Im einzelnen werden in dieser Veröffentlichung eine Anlage und ein Verfahren zum Rezyklieren von Leuchtstoff- und Fernsehbildröhren offenbart, wobei die Röhren in ein gasdicht verschließbares Behältnis eingebracht und unter Wasser zertrümmert werden. Die freiwerdenden aufsteigenden Gase werden abgesaugt und komprimiert der Wiederverwendung zugeführt, wobei dem schadstoffbeschichteten Glasbruch eine die Schadstoffe lösende bzw. ablösende Säure beigegeben wird, die gelösten und abgelösten Schadstoffe aus dem Glasbruch ausgeschwemmt und die metallischen Anteil daraus entnommen werden und danach der Glasbruch der Weiterverarbeitung zugeleitet wird. Der flüssigen Phase wird ein Ausfällungsmittel beigegeben und anschließend wird filtriert, wobei der Filterkuchen an Lanthanide-Hersteller zur Weiterverarbeitung geliefert wird, worauf das Filtrat dem Behälter wieder zugeführt wird, in dem die Röhren zertrümmert werden.

Bei dem bekannten Verfahren werden daher die Metalldämpfe abgesaugt und dann außerhalb der Einrichtung weiterverarbeitet. Es besteht die Gefahr, daß die Einrichtungen zum Absaugen nicht dicht sind, so daß ein entsprechender Metalldampfanteil in die Atmosphäre entweichen kann, was, wie bei Hg-Dämpfen, wegen der Giftigkeit dieser Dämpfe äußerst gefährlich ist.

Der Erfindung liegt die Aufgabe zugrunde, ein Verfahren und eine Einrichtung der angegebenen Art zu schaffen, mit dem bzw. der metall- bzw. metalldampfhaltige Gegenstände, insbesondere quecksilberdampfhaltige Lampen, in besonders umweltschonender Weise entsorgt werden können.

Diese Aufgabe wird erfindungsgemäß durch ein Verfahren der angegebenen Art mit den kennzeichnenden Merkmalen des Patentanspruchs 1 gelöst.

Dem erfindungsgemäßen Verfahren liegt der Gedanke zugrunde, eine Vielzahl von Sammelstellen zu errichten, an denen die vorstehend erwähnten Behältnisse aufgestellt werden, so daß die zu beseitigenden Gegenstände bzw. Lampen ohne lange Wege vom Benutzer selbst entsorgt werden können. Wesentlich ist dabei, daß die in das Behältnis eingeführten Gegenstände innerhalb einer Flüssigkeit zerstört werden, die einerseits ein Schutzmantel in bezug auf die beim Zerstören freiwerdenen Metalle bzw. Metalldämpfe bildet und die andererseits selbst diese Metalle bzw. Metalldämpfe in unschädliche Verbindungen umwandelt. Dabei werden die Metalle bzw. Metalldämpfe durch die Flüssigkeit im wesentlichen sofort immobilisiert, so daß keine Gefahr für Mensch und Umwelt gegeben ist. Die Flüssigkeit bildet ferner einen entsprechenden Implosionsschutz.

So werden die freiwerdenden Metalle bzw. Metalldämpfe beispielsweise durch die im Behältnis befindliche Flüssigkeit in unschädliche Metallsulfide umgewandelt, die sich zusätzlich zu den von den Lampen stammenden Glas- und Metallteilen im Behältnis absetzen. In jedem Fall stellt die im Behältnis befindliche Flüssigkeit sicher, daß keinerlei Metalle bzw. Metalldämpfe in die Atmosphäre entweichen können. Auch über den zerkleinerten Glas-, Kunststoff- und/oder Metallteilen der zerstörten Gegenstände befindet sich immer eine ausreichende Flüssigkeitssäule, so daß auch diese Teile, die entsprechend verunreinigt sind, nicht in Kontakt mit der Atmosphäre treten. Es ist somit sichergestellt, daß die im Behältnis befindlichen zerstörten Gegenstände bzw. Lampen ohne Schädigung von Mensch und Umwelt gelagert werden.

Das erfindungsgemäße Verfahren sieht ferner vor, daß die Behältnisse in bestimmten Abständen entleert werden. Dies kann beispielsweise über Spezialfahrzeuge geschehen, die den Inhalt des Behältnisses absaugen und in einen Fahrzeugtank überführen, oder über Fahrzeuge, die das Behältnis aufladen und einer zentralen Entsorgungsanlage zuführen. In dieser Anlage findet im wesentlichen eine Separation des Inhaltes des entsprechenden Behältnisses statt, wobei die verwendete Flüssigkeit gereinigt und rückgewonnen und die verunreinigten Metall-, Kunststoff-und/oder Glasteile gereinigt, separiert und einer weiteren Verwendung zugeführt werden. Der durch die Umsetzung der Metalle bzw. Metalldämpfe entstandene Schlamm wird separiert, filtriert und ebenfalls einer weiteren Verwendung zugeführt.

Das erfindungsgemäße Verfahren sieht gemäß einer Alternative vor, daß jeder Gegenstand nach Einführung in das Behältnis in die Flüssigkeit gedrückt und darin zerdrückt wird. Vorteilhafterweise wird jedoch mit dem Niederdrücken in die Flüssigkeit erst begonnen, wenn mehrere Gegenstände in das Behältnis eingeführt worden sind. So wird beispielsweise nach Einführung einer Lage von Gegenständen diese in die Flüssigkeit gedrückt und dann zerstört.

Es versteht sich, daß die Gegenstände bzw. Lampen beim Einführen in das Behältnis direkt in die Flüssigkeit fallen. Durch das Eindrücken der Gegenstände in die Flüssigkeit wird sichergestellt, daß diese während des nachfolgenden Zerstörungsvorganges in jedem Fall von einer ausreichenden Flüssigkeitssäule überdeckt sind. Dies ist besonders wichtig, da insbesondere die Lampen beim Zerstören implodieren, so daß sonst die Gefahr des Herausschleuderns von Lampenteilen bzw. der Metalle und Metalldämpfe aus der Flüssigkeit bestehen würde.

Als zusätzliche Maßnahmen zum Vermeiden eines solchen Herausschleuderns werden die Gegenstände in Weiterbildung der Erfindung unter Errichtung einer darüber befindlichen Absperrung innerhalb der Flüssigkeit zerdrückt. Diese Absperrung stellt in jedem Falle sicher, daß durch Implosionen keine Teile bzw. Dämpfe nach oben getrieben werden.

Wie bereits erwähnt, dient die verwendete Flüssigkeit einerseits als Schutzmantel bei der Zerstörung der Gegenstände und andererseits zur Umsetzung der Metalle bzw. Metalldämpfe in unschädliche Bestandteile. Vorzugsweise wird eine Flüssigkeit verwendet, die das freiwerdende Metall bzw. den freiwerdenden Metalldampf im wesentlichen sofort immobilisiert, beispielsweise zu ungiftigen Metallsulfiden umgesetzt, die sich als Schlamm am Boden des Behältnisses absetzen.

Ergänzend sei noch darauf verwiesen, daß mit dem erfindungsgemäßen Verfahren auch Natriumdampf-Lampen entsorgt werden können. Beim Zerstören dieser Lampen im Behältnis wird hierbei ein kurzes Aufflammen, verursacht durch die freiwerdenden Natriumdämpfe, in Kauf genommen bzw. der Flüssigkeit werden Zusätze zugeführt, die ein derartiges Aufflammen verhindern.

Wenn eine bestimmte Anzahl von Lampen in das Behältnis eingeführt worden ist, wird dessen Inhalt, entweder über ein Saugfahrzeug oder durch unmittelbaren Transport des Behältnisses, in einen Behälter der zentralen Aufbereitungsanlage entleert. In diesem Behälter werden ggf. unter Rühren die Flüssigkeit, der durch Umsetzung der Metalle bzw. Metalldämpfe enthaltene Schlamm und die Glas-, Kunststoff- und/oder Metallteile der Gegenstände separiert, und diese Bestandteile werden getrennt abgeführt. Vorzugsweise unterzieht man nach dem Abführen der Flüssigkeit den restlichen Inhalt des Behälters einem oder mehreren Spülvorgängen. Dabei wird in einem Schritt zweckmäßigerweise mit einem sauren Medium als Spülflüssigkeit gearbeitet, das mit einem biologischen Reinigungsmittel versehen ist. In einer zweiten Stufe wird mit Wasser gespült. Diese Spülvorgänge haben die Aufgabe, restliche Anteile an Umsetzungsflüssigkeit und Schlamm vom Restinhalt des Behälters zu entfernen.

Aus der vom Behälter abgeführten Flüssigkeit, dem Spülmittel und dem Wasser trennt man den durch Umsetzung der Metalldämpfe enthaltenen Restschlamm ab, aus dem Restschlamm gewinnt man durch Filtrieren Flüssigkeit, Spülmittel und Wasser wieder und führt diese in das Verfahren zurück und entsorgt den filtrierten Schlamm. Die rückgewonnene Flüssigkeit kann dann wieder zum Befüllen des entleerten Behältnisses bzw. neuer Behältnisse verwendet werden. Spülmittel und Wasser werden für weitere Spülvorgänge eingesetzt.

Nach dem Spülen werden die vom Schlamm separierten und vom Behältnis abgeführten Glas-, Kunststoff- und/oder Metallteile zweckmäßigerweise in einer Endstufe voneinander getrennt.

Die vorstehend genannte Aufgabe wird ferner durch eine Einrichtung zur Durchführung des vorstehend beschriebenen Verfahrens mit den Merkmalen des Patentanspruchs 10 gelöst.

Das Behältnis ist aus einem Material gefertigt, das gegenüber der im Behältnis befindlichen Flüssigkeit resistent ist, vorzugsweise Edelstahl. Das Behältnis ist bis auf eine Einführöffnung, die beispielsweise mit einer Gummimanschette abgedichtet ist, geschlossen. Zum Entleeren besitzt es eine öffenbare Entleerungsöffnung bzw. einen öffenbaren Deckel.

Von wesentlicher Bedeutung für die erfindungsgemäß ausgebildete Einrichtung ist, daß die Brechereinrichtung die Gegenstände innerhalb der Flüssigkeit zerbricht, so daß der entsprechende Flüssigkeitsmantel die freiwerdenden Metalle bzw. Metalldämpfe sofort immobilisiert. Als Brechereinrichtungen können übliche Brecherwerke eingesetzt werden, je nach der Art der zu zerbrechenden Gegenstände. Eine Ausführungsform der Erfindung zeichnet sich dadurch aus, daß die Brechereinrichtung zwei gegenläufig rotierende, zwischen sich einen Walzenspalt bildende Brecherwalzen umfaßt. Die Brechereinrichtung kann jedoch auch eine innerhalb des Behältnisses über den Boden desselben vor- und zurückbewegbare Brecherwalze aufweisen. Bei der erstgenannten Ausführungsform findet der Brechvorgang zwischen den beiden Walzen statt, während er bei der zuletzt genannten Ausführungsform zwischen Walze und Boden stattfindet.,

Bei einer besonders bevorzugten Ausführungsform umfaßt die Brechereinrichtung eine im Behältnis auf- und abbewegbare Platte zum Drücken der Gegenstände in die Flüssigkeit und zum Zerbrechen derselben in der Flüssigkeit. Das Brechorgan (Platte) übernimmt hierbei zwei Aufgaben, nämlich einerseits das Hereindrücken der Gegenstände in die Flüssigkeit und andererseits das Zerbrechen derselben innerhalb der Flüssigkeit.

Im Normalzustand befindet sich die Platte in einer Lage über der Einführöffnung. Nach dem Einführen von einem oder mehreren Gegenständen in das Behältnis wird die Platte in Bewegung versetzt und bewegt sich dabei nach unten in die im Behältnis befindliche Flüssigkeit hinein. Hierbei werden der eingeführte Gegenstand bzw. die eingeführten Gegenstände in die Flüssigkeit gedrückt und schließlich gegen den Boden des Behältnisses gepreßt, so daß sie zerdrückt werden. Dabei bildet die darüber befindliche Flüssikeitssäule einen Schutzmantel in bezug auf das Entweichen der Metalle bzw. Metalldämpfe. Die Platte wirkt dabei ebenfalls als Absperrung, so daß verunreinigte Glas-, Kunststoff-und/oder Metallteile und die Metalle/Metalldämpfe nicht nach oben gelangen können.

Zweckmäßigerweise füllt die Platte nahezu die gesamte Innenfläche des Behältnisses aus und ist als Lochplatte ausgebildet. Bei dieser Ausführungsform kann beim Absenken der Platte die Flüssigkeit im wesentlichen nur durch die Löcher der Lochplatte nach oben strömen.

Damit wird eine besonders sichere Absperrung erreicht, wobei die durch Implosionen verursachten Flüssigkeitsbewegungen stark gedämpft werden. Es versteht sich, daß die Löcher der Lochplatte so klein gehalten sind, daß die durch die Zerstörung der Gegenstände entstehenden Metall-, Kunststoff- und/oder Glasteile nicht durch die Löcher nach oben geschleudert werden können.

Um eine sofortige Zerstörung der Gegenstände zu erreichen, weisen vorzugsweise die Platte auf ihrer Unterseite und das Behältnis auf der Innenfläche seiner Bodenwand vorstehende Abschnitte auf, die Bruchkanten für die Gegenstände bilden.

Um zu verhindern, daß Gegenstände in das Behältnis eingeführt werden, während sich die Platte in ihrem abgesenkten Zustand befindet, weist die Platte eine die Einführöffnung in ihrem abgesenkten Zustand schließende Einrichtung auf. Hierbei kann es sich beispielsweise um eine geeignete Verschlußplatte handeln. Beim Aufwärtsbewegen der Platte gibt diese Verschlußplatte die Einführöffnung dann allmählich wieder frei, so daß in der oberen Endstellung der Platte wieder Gegenstände in das Behältnis eingeführt werden können.

Das Auf- und Abbewegen der Platte kann grundsätzlich manuell oder motorisch erfolgen. Bei der einfachen manuellen Ausführungsform ist hierfür ein geeigneter Drehkurbelantrieb vorgesehen, der mit einem Scherenmechanismus zum Auf- und Abführen der Platte zusammenwirken kann. Sowohl hierbei als auch bei motorischen Antrieben können geeignete Steuereinrichtungen (Endschalter) vorgesehen sein, die die jeweiligen Bewegungen der Platte an den gewünschten Endpunkten stoppen. Solche Einrichtungen sind dem Fachmann bekannt und werden daher an dieser Stelle nicht im einzelnen erläutert.

Eine spezielle Ausführungsform der Erfindung zeichnet sich dadurch aus, daß die im Behältnis auf- und abbewegbare Platte hydraulisch oder pneumatisch auf- und abbewegbar ist. Hierfür ist ein geeignetes Hydraulik- bzw. Pneumatikgerät mit zugehörigen Steuervorrichtungen vorgesehen. Wie bereits erwähnt, sind vorzugsweise geeignete Endschalter angeordnet, die die jeweiligen Bewegungen der Platte an den gewünschten Endpunkten stoppen.

Bei der mit Hydraulik- oder Pneumatikantrieb arbeitenden Platte ist zweckmäßigerweise auf dem Deckel des Behältnisses ein Hydraulik-bzw. Pneumatikzylinder angeordnet, dessen Kolbenstange mit der Oberseite der Platte verbunden ist. Der entsprechende Zylinder ist vorzugsweise als doppelt wirkender Zylinder ausgebildet, so daß je nach Beaufschlagungsrichtung des zugehörigen Kolbens die Platte im Behältnis aboder aufgefahren wird. Die Verbindung zwischen Kolbenstange und Platte ist vorzugsweise gelenkig ausgebildet, so daß bei einem möglichen Verkanten der Platte keine Belastungen auf die Kolbenstange übertragen werden.

Die Platte selbst weist vorzugsweise mindestens eine Ausnehmung auf, die mit einer an der Innenseite des Behältnisses angeordneten Führungsschiene in abgedichteter Weise in Eingriff steht. Zweckmäßigerweise sind vier Führungsschienen vorgesehen, von denen jeweils zwei auf einer Seite des Behältnisses angeordnet sind. Die Führungsschienen sichern eine gleichmäßige Auf- und Abbewegung der Platte im Behältnis, ohne daß hierbei Verkantungen auftreten. Darüber hinaus wird hierdurch bei der zentrisch an der Platte angreifenden Kolbenstange eine gleichmäßige Druckaufbringung gesichert, da die Platte an ihren Randbereichen keine Ausweichmöglichkeiten besitzt. Der Eingriff zwischen Führungsschiene und Platte erfolgt in abgedichteter Weise, wobei hier geeignete elastische Dichtungen vorgesehen sind, die ein Durchdringen der Flüssigkeit verhindern.

Bei einer besonders bevorzugten Ausführungsform der Erfindung ist der Deckel des Behältnisses zusammen mit dem Hydraulik- bzw. Pneumatikzylinder und der Platte vom Behältnis abschwenkbar. Es versteht sich, daß der Deckel das Behältnis in dichtender Weise verschließt, so daß keine Flüssigkeit und keine Gase entweichen können. In der obersten Stellung der Platte befindet diese sich innerhalb des Deckels und außerhalb der Führungsschienen des Behältnisses und kann zusammen mit dem Deckel abgeschwenkt werden. Das Öffnen bzw. Abschwenken des Deckels wird durch in geeigneter Weise angebrachte Gasdruckfedern unterstützt, vorzugsweise durch zwei Gasdruckfedern, die an den beiden Behältnisenden angebracht sind. Beim Schließen des Deckels sorgen geeignete Verschlußeinrichtungen für einen dichtenden Abschluß.

Das Behältnis ist insbesondere fahrbar ausgebildet, wobei entsprechende Räder vorgesehen sind, die vorzugsweise nach oben gedreht werden können, wenn das Behältnis stationär angeordnet werden soll. Dann tragen entsprechende Standfüße das Behältnis. Auf seiner Unterseite weist das Behältnis eine Öffnung zum Abziehen und Befüllen mit der Flüssigkeit auf. Die Gassplitter und Metallteile werden vorzugsweise über einen Schlauch abgesaugt, der von oben in das Behältnis eingeführt wird.

Die erfindungsgemäß ausgebildete Einrichtung weist ferner eine zentrale Anlage zum Separieren des Inhaltes des Behältnisses auf. Dieser zentralen Anlage wird der Inhalt einer Vielzahl von flächendeckend aufgestellten Behältnissen zugeführt. Dies kann über die bereits erwähnten Spezialfahrzeuge geschehen.

Die zentrale Anlage hat die Aufgabe, den Inhalt des Behältnisses, der im wesentlichen aus der verwendeten Flüssigkeit, dem durch Umsetzung der Metalle bzw. Metalldämpfe entstandenen Schlamm und Metall-, Kunststoff-und/oder Glasteilen der Lampen besteht, zu separieren, die einzelnen Bestandteile zu reinigen und in einen wiederverwendbaren bzw. endlagerbaren Zustand zu bringen. Hierzu weist die zentrale Anlage zweckmäßigerweise einen Hauptbehandlungsbehälter und einen Absetzbehälter für die eingesetzte Flüssigkeit auf. Der Inhalt der Behältnisse wird in den Hauptbehandlungsbehälter entleert, und dort wird die Flüssigkeit in den hierfür vorgesehenen Absetzbehälter entfernt. Im Hauptbehandlungsbehälter finden nach dem Abführen der Flüssigkeit ein oder mehrere Spülvorgänge des Restinhalts des Behälters statt. Die zentrale Anlage weist vorzugsweise je einen weiteren Absetzbehälter für ein Spülmittel und Wasser auf, die in den entsprechenden Spülvorgängen eingesetzt werden. Im Hauptbehandlungsbehälter ist zweckmäßigerweise eine Separationseinrichtung für Glas-, Kunststoff- und/oder Metallteile einerseits und den durch die Umsetzung der Metalldämpfe entstandenen Schlamm andererseits vorgesehen. Schließlich weist die Anlage eine Siebeinrichtung zum Trennen der Glas-, Kunststoff- und/oder Metallteile auf.

Geeignete Förder- und Pumpeinrichtungen sowie Filtrationseinrichtungen sind vorgesehen und werden an dieser Stelle nicht mehr im einzelnen beschrieben.

Die Erfindung wird nachfolgend anhand von Ausführungsbeispielen in Verbindung mit der Zeichnung im einzelnen erläutert. Es zeigen:
- Figur 1: eine Seiten- und Vorderansicht eines Behältnisses zur Aufnahme von zu entsorgenden Lampen;
- Figur 2: einen Längsschnitt und einen Querschnitt durch das in Figur 1 dargestellte Behältnis;
- Figur 3: den schematischen Aufbau einer den Behältnissen der Figuren 1 und 2 zugeordneten zentralen Aufbereitungsanlage;
- Figur 4: eine Vorderansicht, teilweise aufgebrochen, einer weiteren Ausführungsform eines Behältnisses zur Aufnahme der zu entsorgenden Lampen; und
- Figur 5: eine Schemadarstellung des Behältnisses zusammen mit weiteren Bestandteilen der erfindungsgemäß ausgebildeten Einrichtung.

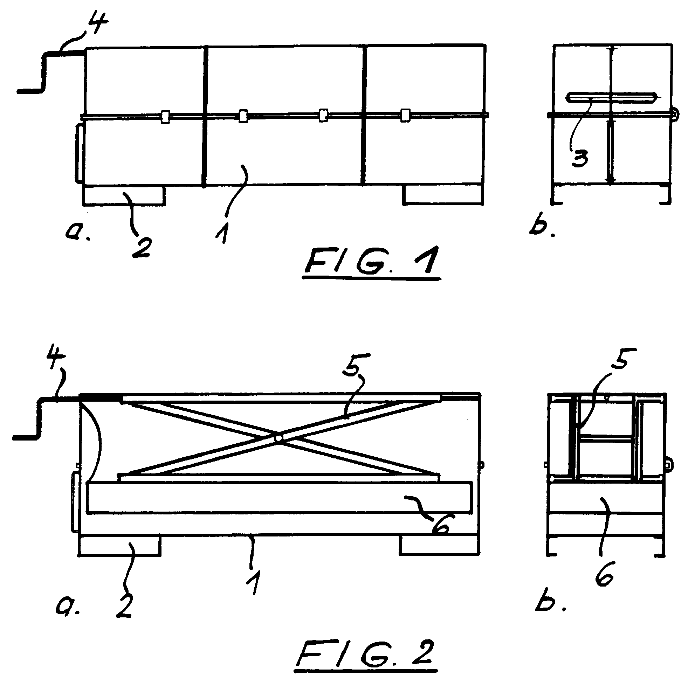

Die Figuren 1 und 2 zeigen ein Behältnis 1, das zur Abfallverwertung von metalldampfhaltigen Lampen dient. Das Behältnis 1 ist kastenförmig ausgebildet und besteht aus Edelstahlblech. An einer Stirnseite befindet sich eine Einführöfffnung 3 für die Entladungslampen. Diese Lampen sind bekannterweise röhrenförmig ausgebildet und besitzen beispielsweise einen Durchmesser von 22 mm. An der Innenseite der Einführöffnung 3 befindet sich eine Gummimanschette, die beim Einführen einer Lampe zur Seite geschoben werden kann, jedoch sonst dichtend an der Stirnwand des Behältnisses anliegt, so daß das Innere des Behältnisses nicht mit der Atmosphäre in Kontakt steht.

Das Behältnis ruht auf geeigneten Lagerelementen 2, beispielsweise U-Trägern.

Ferner ist am Behältnis eine Entleerungsöffnung (nicht gezeigt) vorgesehen, über die der Inhalt des Behältnisses durch Einführung eines Saugrohres entleert werden kann. Diese Entleerungsöffnung ist normalerweise geschlossen.

Figur 1 a zeigt das Behältnis in der Seitenansicht, während Figur 1 b das Behältnis in der Vorderansicht zeigt. Im oberen Bereich der Stirnwand des Behältnisses ist eine Kurbel 4 angeordnet, mittels der eine im Behältnis angeordnete Platte 6 auf- und abbewegt werden kann.

Figur 2 a zeigt einen Längsschnitt durch das Behältnis der Figur 1, während Figur 2 b einen entsprechenden Querschnitt zeigt. Man erkennt, daß die Platte 6 über einen geeigneten Scherenmechanismus 5, der von der Handkurbel 4 betätigt wird, auf- und abbewegt wird. In dem in den Figuren 2 a und 2 b gezeigten Zustand befindet sich die Platte 6 nahezu in ihrer unteren Endstellung, in der sie die in das Behältnis eingeführten Lampen zerdrückt. Die Platte ist hierbei in die im Behältnis befindliche Flüssigkeit eingetaucht. Die Platte ist als Lochplatte (nicht gezeigt) ausgebildet, so daß die Flüssigkeit durch die in der Platte vorgesehenen Löcher nach oben steigen kann. Nach dem Zerdrücken der Lampen zwischen der Platte 6 und dem Boden des Behältnisses wird die Platte durch Betätigung der Handkurbel 4 wieder nach oben in ihre Ausgangsstellung bewegt. In dieser Stellung wird die Einführöffnung 3 wieder freigegeben, die während der Abwärtsbewegung der Platte durch eine zusätzliche Einrichtung (nicht gezeigt) abgedeckt war, um das Einführen von Lampen in dieser Phase zu verhindern.

Ferner ist die Platte auf ihrer Unterseite und der Boden des Behältnisses auf seiner Oberseite mit Unebenheiten (nicht gezeigt) versehen, um die Zerstörung der Lampen zu fördern.

Die vorstehend beschriebene Vorrichtung funktioniert in der folgenden Weise:

Der Benutzer, der eine defekte Entladungslampe entsorgen will, bringt diese zum Behältnis und führt die Lampe durch die über die Gummimanschette geschützte Einführöffnung 3 in das Behältnis ein. Die Platte 6 befindet sich hierbei in ihrer oberen Normallage oberhalb der Einführöffnung 3. Die Lampe fällt dabei auf die im Behältnis befindliche Flüssigkeit, deren Spiegel in einem geeigneten Abstand unterhalb von der Einführöffnung 3 angeordnet ist. Nach Einführung einer bestimmten Anzahl von Lampen in das Behältnis wird durch Betätigung der Handkurbel 4 die Platte 6 abwärtsbewegt, wobei diese die Lampen in die Flüssigkeit drückt und schließlich in Zusammenwirkung mit dem Boden des Behältnisses innerhalb der Flüssigkeit zerdrückt. Beim Abwärtsbewegen der Platte 6 verschließt eine geeignete Einrichtung die Einführöffnung. Während sich die Platte in der Flüssigkeit abwärtsbewegt, steigt diese durch die in der Platte vorgesehenen Löcher auf, so daß die im wesentlichen die gesamte Innenfläche des Behältnisses ausfüllende Platte ohne weiteres abwärtsbewegt werden kann. Beim Zerdrücken der Lampen implodieren diese, wobei jedoch die Flüssigkeit einerseits und die Platte andererseits einen geeigneten Schutzmantel bilden. Die bei den Implosionen freigesetzten Metalle und/oder Metalldämpfe werden sofort durch die Flüssigkeit immobilisiert und in unschädliche Verbindungen, beispielsweise Quecksilbersulfide, überführt. Diese Verbindungen sammeln sich als Schlamm im unteren Bereich des Behältnisses an. Desweiteren lagern sich die Metall- und Glasteile der Lampen auf dem Boden des Behältnisses ab.

Die Platte 6 wird dann durch Betätigung der Handkurbel 4 wieder nach oben in ihre Ausgangsstellung bewegt. Es können jetzt wiederum Lampen in das Behältnis eingeführt werden.

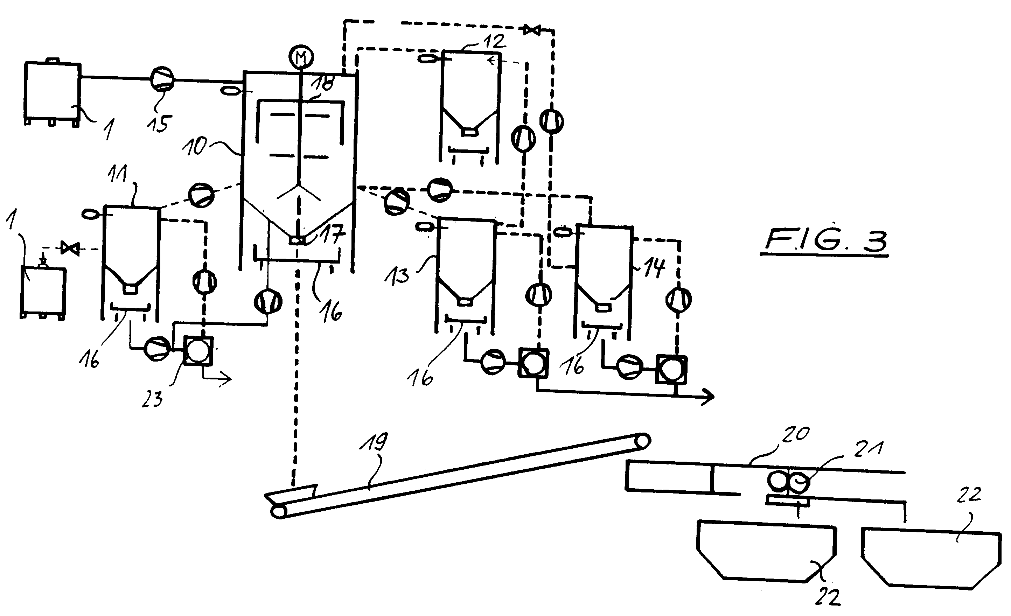

In bestimmten zeitlichen Abständen wird das Behältnis entleert, indem ein Saugrohr über die Entleerungsöffnung eingeführt wird. Der Behälterinhalt wird dann mit Hilfe einer Vakuumpumpe in den Tank eines Spezialfahrzeuges entleert, das den Inhalt einer zentralen Aufbereitungsanlage zuführt. Der schematische Aufbau dieser Aufbereitungsanlage ist in Figur 3 dargestellt.

Das Spezialfahrzeug entleert den Inhalt des Behältnisses 1 über eine entsprechende Pumpe 15 in einen Hauptbehandlungsbehälter 10, der mit einem geeigneten Rührwerk 19 ausgestattet ist. Nachdem eine entsprechende Anzahl von Behälterinhalten in den Hauptbehandlungbehälter 10 entleert worden ist, wird mit dem entsprechenden Aufbereitungsvorgang begonnen. Hierbei wird der Inhalt des Behälters 10 ausreichend gerührt. Nach einer entsprechenden Standzeit wird dann die Flüssigkeit über eine geeignete Pumpe abgezogen und in einen Absetzbehälter 11 überführt. Aus diesem Absetzbehälter wird der sich am Boden absetzende Suifidschlamm in einen Auffangbehälter 16 abgezogen, während die Flüssigkeit im oberen Bereich des Behälters abgezogen und erneut zur Füllung von Behältnissen 1 verwendet wird. Der im Auffangbehälter 16 befindliche Sulfidschlamm wird in einer Filterpresse 23 filtriert und dann weiteren Verwendungszwecken bzw. einer Endlagerung zugeführt. Die in der Filterpresse 23 abgefilterte Flüssigkeit wird in den Absetzbehälter 11 rückgeführt.

Es versteht sich, daß die Abführung der Flüssigkeit aus dem Hauptbehandlungsbehälter 10 über geeignete Flüssigkeitsstandsanzeigen überwacht wird.

Nach dem Abführen der Flüssigkeit wird aus einem Spülflüssigkeitsbehälter 12 dem Hauptbehandlungsbehälter eine Spülflüssigkeit zugesetzt. Bei dieser Spülflüssigkeit handelt es sich um ein mit einem biologischen Reinigungsmittel versehenes saures Medium mit einem pH-Wert von etwa 6. Die Spülflüssigkeit dient zum Spülen des im Behälter 10 befindlichen Restinhaltes. Sie wird vom Hauptbehandlungsbehälter in einen Absetzbehälter 13 für die Spülflüssigkeit abgezogen, aus dem wiederum der entsprechende Sulfidschlamm in einen Auffangbehälter 16 abgezogen wird. Der Schlamm wird in entsprechender Weise über eine Filterpresse aufgearbeitet, wobei die Restflüssigkeit in den Absetzbehälter 13 zurückgeführt wird. Am oberen Ende des Absetzbehälters 13 befindet sich eine Abzugseinrichtung für die Spülflüssigkeit, die in den Spülflüssigkeitsbehälter 12 rückgeführt wird.

Nach dem Entfernen der Spülflüssigkeit aus dem Hauptbehandlungsbehälter 10 wird dann in einer zweiten Stufe mit Wasser gespült, das von einer geeigneten Quelle zugeführt wird. Das verunreinigte Wasser wird dann aus dem Hauptbehandlungsbehälter 10 abgezogen und in einen Auffang- und Absetzbehälter 14 überführt. Aus diesem wird ebenfalls der Schlamm abgezogen und in einem Auffangbehälter 16 aufgefangen. Die Aufarbeitung des Schlammes erfolgt in entsprechender Weise über eine Filterpresse, wobei die Restflüssigkeit in den Behälter 14 zurückgeführt wird.

Im unteren Bereich des Hauptbehandlungsbehälters 10 befindet sich eine entsprechende Siebeinrichtung, mittels der die Metall- und Glasteile der Lampen vom sich im unteren Teil des Behälters 10 ansammelnden Sulfidschlamm getrennt werden. Der Sulfidschlamm gelangt in einen unter dem Behälter 10 angeordneten Auffangbehälter 16 und wird von dort mit dem vom Absetzbehälter 11 kommenden Schlamm vereinigt und der Filterpresse 23 zugeführt. Die Metall- und Glasteile gelangen über einen Behälterauslaß 17 auf eine Fördereinrichtung 19 und werden von dort einem Separierrüttler zugeführt, der die Glas- und Metallteile voneinander trennt. Gegebenenfalls werden die Teile noch durch eine Presse 21 geführt, um aneinanderhaftende Metall- und Glasteile noch zu trennen. Schließlich werden die separierten Teile in geeignete Auffangbehälter 22 überführt.

In den Patentansprüchen sowie der vorhergehenden Beschreibung ist von metall- bzw. metalldampfhaltigen Lampen und von der Umsetzung dieser Metalle bzw. Metalldämpfe die Rede. In der Tat liegt in den Entladungslampen das Metall nicht nur gasförmig vor, sondern auch in feinster elementarer Verteilung. Die erfindungsgemäß eingesetzte Flüssigkeit bildet daher einen entsprechenden Schutzmantel sowohl für die Metalldämpfe als auch für das elementar vorliegende Metall und setzt beide Erscheinungsformen in ungiftige Substanzen um.

Hierbei stellt Quecksilber den bei weitem umweltrelevantesten Bestandteil dar.

Nach Abtrennung des sulfidischen Niederschlages in der zentralen Anlage durch mehrfaches Spülen (Waschen), möglicherweise unter Verwendung von Tensiden, und Entfernung der metallischen Teile der Entladungslampen liegt ein ausschließlich aus Glasbruch bestehendes Konzentrat vor.

Wie Untersuchungen ergeben haben, findet bei Vorliegen des Quecksilbers in der Gasphase oder in Form feinster Tröpfchen die Reaktion Hg° → HgS spontan statt, d.h. unmittelbar bei der Zerstörung der Röhren in einem entsprechenden Flüssigkeitsbad. Hierdurch wird die Entstehung von gasförmigen Emissionen verhindert.

Zur Bestimmung des Restgehaltes an Quecksilber im Glasbruch nach der Behandlung und anschließender Waschung wurden Glasbruchproben (jeweils 500 g) von Leuchtstoffröhren aus drei Versuchsläufen getrennt auf Quecksilber untersucht. Die Bestimmung erfolgt nach zehnminütigem Kochen der Proben in Königswasser mit dem "Quecksilber-Atomabsorptionsspektrometer Hg 254" der Firma Seefelder Meßtechnik auf der Grundlage der sogenannten "Kaltdampf-Technik".

Die Ergebnisse sind nachfolgend wiedergegeben:

| Probe-Nr. | Hg-Konzentration | |
|---|---|---|
| | mg/kg | % |
| Glasbruch GB 1 | 1,22 | 0,00012 |
| Glasbruch GB 2 | 1,07 | 0,00011 |
| Glasbruch GB 3 | 1,24 | 0,00012 |
| Leuchtstofflampen intakt | 100 | 0,01 |

Sie zeigen, daß nur noch Spuren von Quecksilber im Glasbruch auftreten, die den oberen Konzentrationsbereich von anthropogen unbelasteten tonigen Sedimentgesteinen und Böden nur wesentlich überschreiten.

Zieht man für einen Vergleich den Bodengrenzwert der Klärschlammverordnung (AbfKlärV) von 2 mg/kg heran, der dem B-Wert der sogenannten "Holländischen Liste" entspricht, so liegen die Restkonzentrationen im Glasbruch unterhalb des Grenz- bzw. Richtwertes der beiden Verordnungen und sind als unbedenklich einzustufen.

Geht man von einer in Leuchtstoffröhen enthaltenen mittleren Hg-Konzentration von 100 mg/kg (0,01 %) aus, so werden durch das neue Verfahren rund 99 % elminiert.

Obwohl sich aus dem bereits Gesagten eindeutig ergibt, daß von dem so behandelten Glasbruch keine Gefährdung der Umwelt mehr ausgehen kann, wurden zusätzliche Untersuchungen über die Festigkeit der Bindung und damit der Eluierbarkeit des noch verbleibenden Quecksilbers im Glasbruch durchgeführt.

Der Elutionstest nach DIN 38414, Teil 4, ergab, daß in einer aus gleichen Teilen der Proben GB 1 - 3 bestehenden Mischprobe Quecksilber im Eluat nicht nachgewiesen werden konnte. Da bei der angewandten Methode die Nachweisgrenze bei 0,05 µg/l liegt, bedeutet dies, daß bei einem Trinkwassergrenzwert für Quecksilber von 1 µg/l die Konzentration im Eluat weniger als das 20-fache dieses Wertes beträgt.

Die Ursache dieser fehlenden (bzw. extrem geringen unterhalb der Nachweisgrenze liegenden) Löslichkeit liegt in der Bindungsfom der im Glasbruch noch enthaltenden winzigen Partikel von Quecksilbersulfid, das aus der Behandlung mit der verwendeten Flüssigkeit stammt.

Dies bedeutet, daß zu der minimalen Gesamtkonzentration im Glasbruch noch eine sehr stabile Bindungsform hinzukommt, die eine Auswaschung des Quecksilbers bei einer Deponierung unmöglich macht.

Es läßt sich somit zusammenfassend feststellen,

daß bei einer Zerkleinerung von Entladungslampen innerhalb der beschriebenen Flüssigkeit gasförmiges wie partikuläres Quecksilber spontan in unlösliche Quecksilberverbindungen übergeführt wird und daher keine gasförmigen Emissionen entstehen können; und
daß die Restkonzentration des Glasbruchs nach einer Behandlung mit dieser Flüssigkeit (sie liegt bei ca 1 % der Ausgangskonzentration) so gering ist, daß eine Gefährdung der Umwelt über den Luft-, Boden- oder Wasserpfad auszuschließen ist. Das Vorliegen des Rest-Quecksilbers in einer immobilen Bindungsform (praktisch unlöslich in Wasser) verstärkt diese Aussage.

Abschließend sei noch erwähnt, daß die beim erfindungsgemäßen Verfahren bzw. der erfindungsgemäß ausgebildeten Einrichtung verwendeten Behältnisse auch als mobile Anlagen ausgebildet sein können. Es versteht sich ferner, daß die Erfindung alle möglichen Lampenformen abdeckt, beispielsweise auch runde Ausführungsformen, Ausführungsformen in Form von Buchstaben etc..

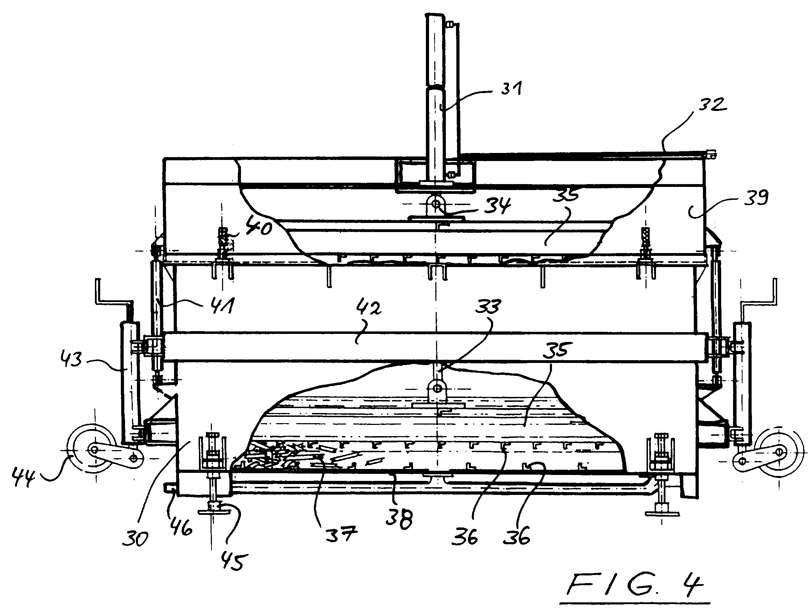

Figur 4 zeigt eine weitere Ausführungsform eines Behältnisses der erfindungsgemäß ausgebildeten Einrichtung. Das Behältnis 30 besitzt die Form eines rechteckigen Kastens mit einem Deckel 39 und einem Boden 38. Das Behältnis ist verfahrbar ausgebildet und besitzt hierzu vier an seinen Stirnseiten angeordnete Räder 44, die mit Hilfe von Handkurbeln aufwärts und abwärts bewegt werden können. Durch Abwärtsbewegen der Räder 44 erhält das Behältnis 30 eine Transportstellung, während es in Figur 4 einen stationären Zustand einnimmt, in dem vier Füße 45 das Behältnis am Boden abstützen. Auch diese Füße sind auf- und abbewegbar, so daß je nach gewünschtem Zustand das Behältnis entweder über die Räder 44 oder die Füße 45 abgestützt werden kann.

Der rechteckige Kasten weist ein um diesen laufendes Verstärkungsband 42 auf, das geeignete Halterungen für Pfosten 43 besitzt, die die Räder 44 drehbar lagern. Zum Höhenverstellen der Räder 44 dienen entsprechende Handkurbeln.

Der Deckel 39 des Behältnisses ist relativ hoch ausgebildet, so daß er die Platte 35 zum Zerstören der Lampen in deren oberster Stellung aufnehmen kann. In dieser Stellung kann der Deckel 39 vom übrigen Behältnis über geeignete Schwenkeinrichtungen abgeschwenkt werden. Dieser Vorgang wird durch zwei Gasfedern 41, die an den Stirnseiten des Behältnisses vorgesehen sind, unterstützt. Zum Schließen des Deckels dienen geeignete Verschlüsse 40. Diese Verschlüsse schließen den Deckel flüssigkeits- und gasdicht. Es versteht sich, daß zwischen Deckel und Behältnis geeignete Dichtungen vorgesehen sind, um den entsprechenden flüssigkeits- bzw. gasdichten Abschluß zu gewährleisten.

Zur Auf- und Abbewegung der Platte 35 dient ein doppelt wirkender Hydraulikzylinder 31, dessen Kolben über eine geeignete Hydraulikleitung 32 mit Druck beaufschlagt wird. Geeignete Steuereinrichtungen sorgen für die gewünschte Beaufschlagung des Kolbens auf dessen Ober- bzw. Unterseite, je nachdem ob eine Abwärts- oder eine Aufwärtsbewegung der Platte 35 gewünscht wird. Der Kolben ist mit einer Kolbenstange 33 verbunden, die über eine Gelenkverbindung 34 an der Oberseite der Platte 35 befestigt ist. Durch diese Gelenkverbindung können Verkantungen u. dgl. der Platte ausgeglichen werden, ohne daß sich die entsprechenden Belastungen auf die Kolbenstange übertragen.

Die Druckplatte 35 wird im Behältnis über vier an der Innenseite des Behältnisses angeordneten Vertikal schienen geführt, die mit entsprechenden Ausnehmungen in der Platte über geeignete Profildichtungen in Eingriff stehen. Diese Führungsschienen sind in der Figur 4 nicht gezeigt. Sie sorgen für eine korrekte Auf- und Abbewegung der Platte in einer Weise, daß diese im wesentlichen ihre Horizontallage beibehält.

Auf der Unterseite der Platte 35 sind quer zur Längserstreckung des Behältnisses verlaufende Zackenleisten 36 vorgesehen, die sich ebenfalls am Boden 38 des Behältnisses befinden. Diese Zackenleisten unterstützen das Zerbrechen der zu entsorgenden Lampen. Wie bei der in den Figuren 1 bis 3 gezeigten Ausführungsform, ist die Platte 35 mit einer Vielzahl von Öffnungen versehen, so daß die entsprechende Flüssigkeit durch die in der Platte vorgesehenen Löcher nach oben steigen kann.

Im unteren Bereich einer Stirnseite des Behältnisses befindet sich ein Rohrstutzen 46, der zur Entnahme der Flüssigkeit aus dem Behältnis bzw. zum Befüllen des Behältnisses mit Flüssigkeit dient.

Abgesehen von dem haubenförmigen Deckel 39, dem hydraulischen Antrieb der Platte 35, den Gasfedern 41, den vorgesehenen Rädern 44 und den höhenbeweglichen Füßen 45 entspricht das Behältnis der Figur 4 in seinem Aufbau und in seiner Funktionsweise im wesentlichen dem in den Figuren 1 bis 3 gezeigten und vorstehend beschriebenen Behältnis.

Je nach Ausführungsform kann der Hydraulikzylinder nach dem Einwerfen von einer oder einer Vielzahl von zu entsorgenden Entladungslampen betätigt werden.

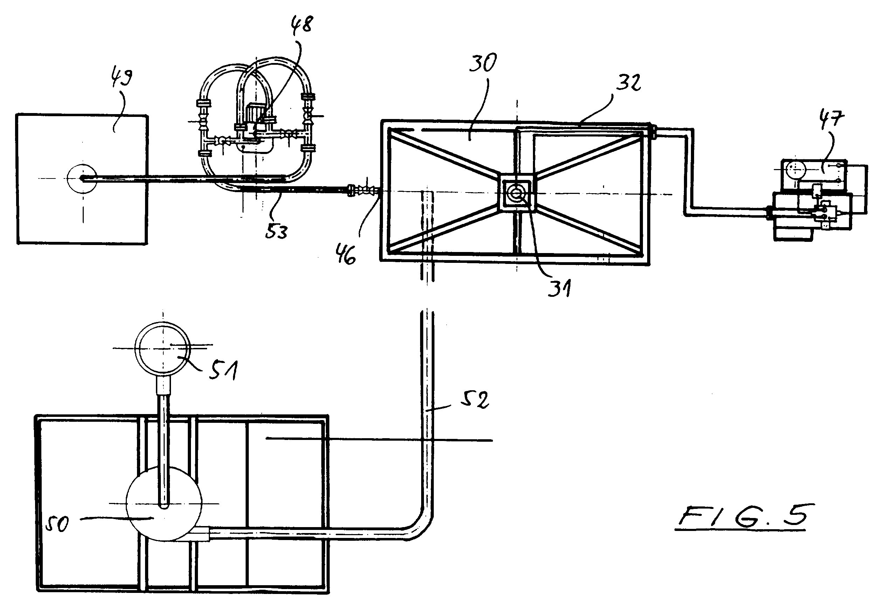

Figur 5 zeigt eine schematische Darstellung des Behältnisses 30 der Figur 4 in Verbindung mit diversen Zusatzgeräten. Zum einen ist der Hydraulikzylinder 31 über geeignete Hydraulikleitungen 32 an ein Hydraulikgerät 47 angeschlossen, das mit geeigneten Steuereinrichtungen versehen ist. Durch Betätigung des Hydraulikgerätes fährt die Kolbenstange 33 des Hydraulikzylinders 31 nach unten oder oben, um hierdurch die Platte 35 im Behältnis entsprechend ab und auf zu bewegen.

Figur 5 zeigt desweiteren, wie an den Entleerungsstutzen 46 eine Flüssigkeitsleitung 53 angeschlossen ist, die über eine geeignete Förderpumpe 48 zu einem Flüssigkeitsbehälter (Zwischenbehälter) 49 führt. Über die Leitung 53 wird die im Behältnis 30 befindliche Flüssigkeit aus dem Behältnis in den Zwischenbehälter 49 abgepumpt und, ggf. nach entsprechender Aufbereitung, wieder in das Behältnis zurückgepumpt.

Das im Behältnis entstehende Metall-Glas-Gemisch wird über eine Leitung 52 und einen Unterdruckerzeuger 51 in ein Silo 50 zur weiteren Verarbeitung abgesaugt.

Wie vorstehend beschrieben und dargestellt, kann es sich bei der im Behältnis angeordneten Platte um ein im wesentlichen ebenes Element handeln. Die Platte kann jedoch auch im Schnitt V-förmig bzw. dreiecksförmig ausgebildet sein, wobei sie mit einem entsprechend ausgebildeten Boden des Behältnisses zusammenwirkt. Durch den V-förmig ausgebildeten Boden sammeln sich die eingeführten Gegenstände an der tiefsten Stelle desselben, wobei durch Absenken der Platte an deren beiden Dreiecksseiten ein entsprechender Brechvorgang erfolgt. Durch diese Ausführungsform wird sichergestellt, daß das zu zerbrechende Material in der Mitte des Bodens konzentriert wird.

Eine weitere Alternative in bezug auf die Ausbildung der Platte sieht vor, daß diese am Behältnis angelenkt ist und durch einen Schwenkvorgang auf- und abbewegt wird. Beispielsweise ist die Platte hier über Scharniere an einer Längsseite des Behältnisses befestigt. Durch Herabschwenken der Platte werden die Gegenstände in die Flüssigkeit eingeführt und schließlich durch weiteres Herabschwenken der Platte zerbrochen. Nach Beendigung des Brechvorganges wird die Platte wieder nach oben verschwenkt.

Auch kann eine stempelförmig ausgebildete Platte Verwendung finden.

In Weiterbildung der Erfindung ist im Behältnis eine Ultraschallbehandlungseinrichtung vorgesehen. Mit dieser Einrichtung werden der im Behältnis befindlichen Flüssigkeit Ultraschallimpule aufgeprägt, die das während des Zerbrechens der Gegenstände freiwerdende, zu immobilisierende Metall (Quecksilber) sehr fein verteilen, wodurch die sofortige Umsetzung des Metalls in entsprechende unschädliche Verbindungen begünstigt wird. Die Ultraschallbehandlungseinrichtung kann beispielsweise einen in das Behältnis eingeführten Stab umfassen, der die entsprechenden Impulse abgibt. Es können jedoch auch Teile des Behältnisses oder das gesamte Behältnis als entsprechende Behandlungseinrichtungen wirken, wenn diese entsprechende Impulse abgeben. Vorzugsweise kommen hierbei sogenannte Tauchschwinger zur Anwendung, die im Behältnis angeordnet sind.

In bezug auf den am Behältnis vorgesehenen An/Absaugstutzen ist es von Vorteil, eine abnehmbare Lochplatte mit Verstärkung einzubringen, die das Absaugen schneller und effektiver möglich macht. Der Boden des Behältnisses ist mit Gefälle zu versehen, wobei der Stutzen am tiefsten Punkt angeordnet ist. Die entsprechende Lochplatte ist waagerecht angebracht und besitzt eine Stärke von mindestens 3 mm. Die Lochung sollte 2,5 mm nicht überschreiten.

Die vorstehend erwähnte Ultraschallbehandlung ist insbesondere bei Sonderformen von Lampen und Reklameröhren von Vorteil, da hier Quecksilber in einer so großen metallischen Form vorliegt, daß die Umsetzung nicht so schnell vonstatten geht. Die abgegebenen Ultraschallwellen zerkleinern das metallische Quecksilber bei ausreichender Intensität derart, daß eine vollständige Umwandlung beispielsweise in Quecksilbersulfid erfolgt.

Die Schwingungen können mittels eines anderen Grundbehälters, der als Ultraschallschwingwanne ausgebildet ist, übertragen werden, oder mittels eines besonders intensiven Ultraschallstabes.

Was die zentrale Anlage zum Separieren des Inhaltes des Behältnisses anbetrifft, so erfolgt hierbei bei einer Variante vor der Filtration eine Fällung der Metallteile in Absetzbehältern in Kegelböden. Je nach Belastung der Flüssigkeit des Behältnisses mit Schwermetallen aus den zu entsorgenden Gegenständen erfolgt eine wertabhängige Zugabe von Eisenchlorid und Flockungsmittel.

Als das Metall bzw. den Metalldampf in unschädliche Verbindungen umwandelnde Flüssigkeit wird vorzugsweise Wasser verwendet, dem Zusammensetzungen nach den DE-PS'en 39 17 412 oder 40 13 974 zugesetzt wurden.

## Patentansprüche

1. Verfahren zur Abfallverwertung von metall- bzw. metalldampfhaltigen Gegenständen, insbesondere quecksilberdampfhaltigen Lampen, bei dem die Gegenstände in ein eine Flüssigkeit enthaltendes Behältnis (1) eingeführt und innerhalb der Flüssigkeit unter Freigabe des Metalls bzw. Metalldampfes zerdrückt werden und bei dem die aus den zerdrückten Gegenständen entstandenen Substanzen aus dem Behältnis (1) abgezogen und aufbereitet werden, dadurch gekennzeichnet, daß eine Flüssigkeit verwendet wird, die mit dem Metall bzw. Metalldampf chemisch reagiert und diese in unschädliche Verbindungen, insbesondere Sulfide, umwandelt, die Gegenstände in die Flüssigkeit gedrückt werden, so daß sich über ihnen eine ausreichende Flüssigkeitsmenge befindet, man das beim Zerdrücken freiwerdende Metall bzw. den freiwerdenden Metalldampf mit der chemisch reaktiven Flüssigkeit reagieren läßt und man den durch die Umsetzung des Metalls bzw. Metalldampfes erhaltenen Schlamm zusammen mit der Flüssigkeit und den Kunststoff- bzw. Glas- und Metallteilen der Gegenstände vom Behältnis (1) abzieht und in einer zentralen Anlage hiervon abtrennt.

2. Verfahren nach Anspruch 1, dadurch gekennzeichnet, daß die Gegenstände nach Einführung mehrerer Gegenstände in das Behältnis in die Flüssigkeit gedrückt werden.

3. Verfahren nach Anspruch 1 oder 2, dadurch gekennzeichnet, daß die Gegenstände unter Errichtung einer darüber befindlichen Absperrung innerhalb der Flüssigkeit zerdrückt werden, so daß durch die dabei entstehenden Implosionen im wesentlichen keine Bestandteile aus der Flüssigkeit herausgeschleudert werden.

4. Verfahren nach einem der vorangehenden Ansprüche, dadurch gekennzeichnet, daß eine Flüssigkeit verwendet wird, die das freiwerdende Metall bzw. den freiwerdenden Metalldampf im wesentlichen sofort immobilisiert.

5. Verfahren nach einem der vorangehenden Ansprüche, dadurch gekennzeichnet, daß man den Inhalt des Behältnisses in einen Behälter der zentralen Anlage entleert, in diesem die Flüssigkeit, den durch Umsetzung des Metalls bzw. der Metalldämpfe erhaltenen Schlamm und die Kunststoff- bzw. Glas- und Metallteile der Gegenstände separiert und diese Bestandteile getrennt abführt.

6. Verfahren nach Anspruch 5, dadurch gekennzeichnet, daß man nach dem Abführen der Flüssigkeit den restlichen Inhalt des Behälters einem oder mehreren Spülvorgängen unterzieht.

7. Verfahren nach Anspruch 6, dadurch gekennzeichnet, daß man aus der vom Behälter abgeführten Flüssigkeit und dem Spülmittel den durch Umsetzung des Metalls bzw. der Metalldämpfe enthaltenen Restschlamm abtrennt, aus dem Restschlamm durch Filtrieren Flüssigkeit und Spülmittel wiedergewinnt, diese in das Verfahren rückführt und den filtrierten Schlamm entsorgt.

8. Verfahren nach Anspruch 7, dadurch gekennzeichnet, daß man den Restschlamm durch Ausfällen abtennt.

9. Verfahren nach einem der Ansprüche 6 bis 8, dadurch gekennzeichnet, daß man die separierten und vom Behälter abgeführten Kunststoff-, Glasund Metallteile in einer Endstufe voneinander trennt.

10. Einrichtung zur Durchführung des Verfahrens nach einem der Ansprüche 1 bis 9 mit einem eine Flüssigkeit enthaltenden Behältnis (1) mit einer Einführöffnung (3) und einer im Behältnis (1) angeordneten Brechereinrichtung zum Brechen der Gegenstände, dadurch gekennzeichnet, daß die Flüssigkeit eine das Metall bzw. den Metalldampf in unschädliche Verbindungen, insbesondere Sulfide, umwandelnde Flüssigkeit ist und daß die Einrichtung eine Einrichtung (6, 35) zum Drücken der Gegenstände in die Flüssigkeit aufweist.

11. Einrichtung nach Anspruch 10, dadurch gekennzeichnet, daß die Brechereinrichtung zwei gegenläufig rotierende, zwischen sich einen Walzenspalt bildende Brecherwalzen umfaßt.

12. Einrichtung nach Anspruch 10, dadurch gekennzeichnet, daß die Brechereinrichtung eine innerhalb des Behältnisses über den Boden desselben vor- und zurückbewegbare Brecherwalze aufweist.

13. Einrichtung nach Anspruch 10, dadurch gekennzeichnet, daß die Brechereinrichtung eine im Behältnis (1) auf und abbewegbare Platte (6) zum Drücken der Gegenstände in die Flüssigkeit und zum Zerbrechen derselben in der Flüssigkeit umfaßt.

14. Einrichtung nach Anspruch 10, dadurch gekennzeichnet, daß die Platte (6) nahezu die gesamte Innenfläche des Behältnisses (1) ausfüllt und als Lochplatte ausgebildet ist.

15. Einrichtung nach Anspruch 13 oder 14, dadurch gekennzeichnet, daß die Platte (6) auf ihrer Unterseite und das Behältnis (1) auf der Innenfläche seiner Bodenwand vorstehende Abschnitte aufweisen.

16. Einrichtung nach einem der Ansprüche 13 bis 15, dadurch gekennzeichnet, daß die Platte (6) eine die Einführöffnung (3) in ihrem abgesenkten Zustand versperrende Einrichtung aufweist.

17. Einrichtung nach einem der Ansprüche 13 bis 16, dadurch gekennzeichnet, daß die Platte (6) manuell auf- und abbewebar ist.

18. Einrichtung nach einem der Ansprüche 10 bis 17, dadurch gekennzeichnet, daß sie desweiteren eine zentrale Anlage zum Separieren des Inhaltes des Behältnisses (1) aufweist.

19. Einrichtung nach Anspruch 18, dadurch gekennzeichnet, daß die zentrale Anlage einen Hauptbehandlungsbehälter (10) und einen Absetzbehälter (11) für die eingesetzte Flüssigkeit besitzt.

20. Einrichtung nach Anspruch 19, dadurch gekennzeichnet, daß die zentrale Anlage je einen weiteren Absetzbehälter (13, 14) für ein Spülmittel und Wasser aufweist.

21. Einrichtung nach Anspruch 19 oder 20, dadurch gekennzeichnet, daß der Hauptbehandlungsbehälter (10) eine Separationseinrichtung für Glasbzw. Kunststoff- und Metallteile einerseits und den durch die Umsetzung des Metalls bzw. der Metalldämpfe entstandenen Schlamm andererseits aufweist.

22. Einrichtung nach einem der Ansprüche 18 bis 21, dadurch gekennzeichnet, daß sie eine Siebeinrichtung (20) zum Trennen der Glas- bzw. Kunststoff- und Metallteile besitzt.

23. Einrichtung nach einem der Ansprüche 13 bis 16, dadurch gekennzeichnet, daß die im Behältnis (30) auf- und abbewegbar Platte (35) hydraulisch oder pneumatisch auf- und abbewegbar ist.

24. Einrichtung nach Anspruch 23, dadurch gekennzeichnet, daß das Behältnis (30) einen Deckel (39) aufweist, auf dem ein Hydraulik- bzw. Pneumatikzylinder (31) angeordnet ist, dessen Kolbenstange (32) mit der Oberseite der Platte (35) verbunden ist.

25. Einrichtung nach einem der Ansprüche 13 bis 16 und 23 bis 24, dadurch gekennzeichnet, daß die Platte (35) mindestens eine Ausnehmung aufweist, die mit einer an der Innenseite des Behältnisses (30) angeordneten Führungsschiene in abgedichteter Weise in Eingriff steht.

26. Einrichtung nach Anspruch 24 oder 25, dadurch gekennzeichnet, daß der Deckel (39) des Behältnisses (30) haubenförmig ausgebildet und zusammen mit dem Hydraulik- bzw. Pneumatikzylinder (31) und der Platte (35) vom Behältnis abschwenkbar ist.

27. Einrichtung nach einem der Ansprüche 10 bis 26, dadurch gekennzeichnet, daß das Behältnis (30) verfahrbar ist.

28. Einrichtung nach einem der Ansprüche 10 bis 27, dadurch gekennzeichnet daß das Behältnis (30) in seinem unteren Bereich eine Öffnung (Stutzen 46) zum Abziehen und Befüllen mit der Flüssigkeit aufweist.

29. Einrichtung nach einem der Ansprüche 25 bis 28, dadurch gekennzeichnet, daß der abschwenkbare Deckel (39) durch Unterstützung von mindestens einer Gasdruckfeder (41) öffenbar ist.

30. Einrichtung nach einem der Ansprüche 13 bis 29, dadurch gekennzeichnet, daß die Platte im Behältniss auf- und abschwenkbar ist.

31. Einrichtung nach einem der Ansprüche 13 bis 30, dadurch gekennzeichnet, daß die Platte V-förmig ausgebildet ist und mit einem V-förmig ausgebildeten Boden des Behältnisses zusammenwirkt.

32. Einrichtung nach einem der Ansprüche 10 bis 31, dadurch gekennzeichnet, daß im Behältnis eine Einrichtung zur Ultraschallbehandlung (Tauchschwinger) angeordnet ist.

## Claims

1. A process for the waste disposal of articles containing a metal or metal vapour, especially mercury-vapour containing lamps, according to which the articles are introduced into a container (1) containing a liquid and are crushed within the liquid thereby releasing the metal or metal vapour, and according to which the substances generated from the crushed articles are withdrawn from the container (1) and are processed, characterized by using a liquid chemically reacting with the metal or metal vapour and converting the same into innoxious compounds, especially sulphides, pushing the articles into the liquid so that a sufficient amount of liquid is above the same, reacting the metal or metal vapour released during the crushing step with the chemically reactive liquid, and withdrawing the slurry obtained by the conversion of the metal or metal vapour together with the liquid and the plastics or glass and metal components of the articles from the container (1) and separating the same from these components in a central processing plant.

2. The process according to claim 1, characterized by pushing the articles into the liquid after the introduction of a plurality of articles into the container.

3. The process according to claim 1 or 2, characterized by crushing the articles within the liquid with the installation of a blocking thereabove so that substantially no components are thrown out of the liquid by the generated implosions.

4. The process according to one of the preceding claims, characterized by using a liquid substantially immediately immobilizing the released metal or the released metal vapour.

5. The process according to one of the preceding claims, characterized by emptying the content of the container into a receptacle of the central processing plant, separating in the same the liquid, the slurry obtained by the conversion of the metal or of the metal vapours and the plastics or glass and metal components of the articles, and separately discharging these components.

6. The process according to claim 5, characterized by subjecting the residual content of the container to one rinsing process or a plurality of rinsing processes after having discharged the liquid.

7. The process according to claim 6, characterized by separating the residual slurry obtained by the conversion of the metal or of the metal vapours from the liquid and the rinsing agent discharged from the container, recovering the liquid and the rinsing agent from the residual slurry by filtration, reconducting the same into the process and disposing of the filtrated slurry.

8. The process according to claim 7, characterized by separating the residual slurry by precipitating the same.

9. The process according to one of the claims 6 to 8, characterized by separating the separated plastics, glass and metal components discharged from the container in a final stage.

10. A means for carrying out the process according to one of the claims 1 to 9, said means comprising a container (1) containing a liquid and having an inlet opening (3), and a crushing means for crushing the articles disposed in the container, characterized in that the liquid is a liquid which converts the metal or the metal vapour into innoxious compounds, especially sulphides, and in that the means includes a means (6, 35) for pushing the articles into the liquid.

11. The means according to claim 10, characterized in that the crushing means includes two oppositely rotating crushing rollers forming between them a roller gap.

12. The means according to claim 10, characterized in that the crushing means has a crushing roller which is adapted to be forwardly and backwardly moved within the container over the bottom of the same.

13. The means according to claim 10, characterized in that the crushing means includes a plate (6) movable up and down within the container (1) for pushing the articles into the liquid and for crushing the same within the liquid.

14. The means according to claim 10, characterized in that the plate (6) fills out nearly the entire inner surface of the container (1) and is formed as apertured plate.

15. The means according to claim 13 or 14, characterized in that the plate (6) on its lower side and the container (1) on the inner surface of its bottom wall have projecting portions.

16. The means according to one of the claims 13 to 15, characterized in that the plate (6) has a member blocking the inlet opening (3) when the plate (6) is in its lowered condition.

17. The means according to one of the claims 13 to 16, characterized in that the plate (6) is manually movable up and down.

18. The means according to one of the claims 10 to 17, characterized in that it has furthermore a central processing plant for the separation of the contents of the container (1).

19. The means according to claim 18, characterized in that the central processing plant has a main processing receptacle (10) and a settling container (11) for the used liquid.

20. The means according to claim 19, characterized in that the central processing plant has further settling containers (13, 14) for a rinsing agent and water.

21. The means according to claim 19 or 20, characterized in that the main processing receptacle (10) has a separation means for glass or plastics and metal components on the one side and for the slurry generated by the conversion of the metal or the metal vapours on the other side.

22. The means according to one of the claims 18 to 21, characterized in that it comprises screening means (20) for the separation of the glass or plastics and metal components.

23. The means according to one of the claims 13 to 16, characterized in that the plate (35) which is movable up and down in the container (30) is hydraulically or pneumatically movable up and down.

24. The means according to claim 23, characterized in that the container (30) has a lid (39) on which a hydraulic or pneumatic cylinder (31) is disposed with a piston rod (32) connected to the upper side of the plate (35).

25. The means according to one of the claims 13 to 16 and 23 to 24, characterized in that the plate (35) has at least one recess, which is in sealed engagement with a guide rail disposed at the inner side of the container (30).

26. The means according to claim 24 or 25, characterized in that the lid (39) of the container (30) is formed as a hood and is adapted to be swung off from the container together with the hydraulic or pneumatic cylinder (31) and the plate (35).

27. The means according to one of the claims 10 to 26, characterized in that the container (30) is movable.

28. The means according to one of the claims 10 to 27, characterized in that the container (30) has in its lower portion an aperture (connection piece 46) for discharging and filling the liquid.

29. The means according to one of the claims 25 to 28, characterized in that the lid (39) which is adapted to be swung off is openable under the assistance of at least one gas pressure spring (41).

30. The means according to one of the claims 13 to 29, characterized in that the plate is swingable up and down in the container.

31. The means according to one of the claims 13 to 30, characterized in that the plate is V-shaped and cooperates with a V-shaped bottom of the container.

32. The means according to one of the claims 10 to 31, characterized in that a means for ultrasound treatment (immersable transducer) is disposed in the container.

## Revendications

1. Procédé de récupération d'objets contenant des métaux ou des vapeurs métalliques, en particulier des lampes contenant des vapeurs de mercure, dans lequel les objets sont placés dans un récipient (1) contenant un liquide, et sont compressés à l'intérieur du liquide avec libération du métal ou de la vapeur métallique, et dans lequel les substances sortant des objets comprimés sont extraites du récipient (1) et sont traitées, caractérisé en ce que l'on utilise un liquide qui réagit chimiquement avec le métal ou la vapeur de métal et les transforme en composés non toxiques, en particulier des sulfures, en ce que les objets sont comprimés dans le liquide de telle sorte qu'au-dessus d'eux se trouve une quantité suffisante de liquide, en ce que l'on fait réagir le métal ou la vapeur métallique se libérant lors de la compression avec le liquide chimiquement réactif et en ce que l'on extrait du récipient (1), en même temps que le liquide et les parties en plastique, en verre et en métal des objets la boue obtenue par la réaction du métal ou de la vapeur métallique, et qu'on les en sépare dans une installation centrale.

2. Procédé selon la revendication 1, caractérisé en ce qu'après l'introduction de plusieurs objets dans le récipient les objets sont comprimés dans le liquide.

3. Procédé selon la revendication 1 ou 2, caractérisé en ce que les objets sont comprimés à l'intérieur du liquide en établissant une barrière située au-dessus de celui-ci, de sorte que les implosions qui se produisent à cette occasion n'expulsent essentiellement aucun composant hors du liquide.

4. Procédé selon l'une des revendications précédentes, caractérisé en ce que l'on utilise un liquide qui immobilise essentiellement immédiatement le métal ou la vapeur métallique qui se libèrent.

5. Procédé selon l'une des revendications précédentes, caractérisé en ce que l'on vide le contenu du récipient dans un conteneur de l'installation centrale, dans lequel on sépare le liquide, la boue obtenue par la réaction du métal ou de la vapeur métallique et les parties en plastique, en verre et en métal des objets, et en ce que l'on extrait ces composants séparément.

6. Procédé selon la revendication 5, caractérisé en ce qu'après l'extraction du liquide, on soumet le reste du contenu du conteneur à une ou plusieurs opérations de rinçage.

7. Procédé selon la revendication 6, caractérisé en ce que l'on sépare du liquide extrait du conteneur et de l'agent de rinçage la boue résiduelle obtenue par réaction du métal ou de la vapeur métallique, en ce que l'on récupère de la boue résiduelle le liquide et l'agent de rinçage par filtration, en ce que l'on renvoie ceux-ci dans le procédé et en ce que l'on élimine la boue filtrée.

8. Procédé selon la revendication 7, caractérisé en ce que l'on sépare la boue résiduelle par précipitation.

9. Procédé selon l'une des revendications 6 à 8, caractérisé en ce que l'on sépare les unes des autres dans une étape finale les parties en plastique, en verre et en métal séparées et extraites du réservoir.

10. Dispositif en vue d'exécuter le procédé selon l'une des revendications 1 à 9, comportant un récipient (1) contenant un liquide et présentant une ouverture d'introduction (3) et un dispositif de concassage disposé dans le récipient (1), pour rompre les objets, caractérisé en ce que le liquide est un liquide qui convertit le métal ou la vapeur métallique en composés non toxiques, en particulier des sulfures, et en ce que le dispositif présente un dispositif (6, 35) pour repousser les objets dans le liquide.

11. Dispositif selon la revendication 10, caractérisé en ce que le dispositif de concassage comprend deux cylindres concasseurs tournant en sens inverse et formant entre eux un interstice de cylindres.

12. Dispositif selon la revendication 10, caractérisé en ce que le dispositif de concassage présente un cylindre concasseur qui peut être déplacé en va-et-vient à l'intérieur du récipient, au-dessus du fond de celui-ci.

13. Dispositif selon la revendication 10, caractérisé en ce que le dispositif de concassage comporte une plaque (6) pouvant être déplacée de haut en bas dans le récipient (1), pour repousser les objets dans le liquide et les rompre dans le liquide.

14. Dispositif selon la revendication 10, caractérisé en ce que la plaque (6) remplit pratiquement toute la surface intérieure du récipient (1) et est configurée comme plaque perforée.

15. Dispositif selon la revendication 13 ou 14, caractérisé en ce que, de même que le récipient (1) sur la surface intérieure de sa paroi de fond, la plaque (6) présente des parties en saillie sur sa face inférieure.

16. Dispositif selon l'une des revendications 13 à 15, caractérisé en ce que la plaque (6) présente un dispositif fermant l'ouverture d'introduction (3) lorsqu'elle se trouve en position abaissée.

17. Dispositif selon l'une des revendications 13 à 16, caractérisé en ce que la plaque (6) peut être relevée ou abaissée manuellement.

18. Dispositif selon l'une des revendications 10 à 17, caractérisé en ce qu'il présente par ailleurs une installation centrale pour la séparation du contenu du récipient (1).

19. Dispositif selon la revendication 18, caractérisé en ce que l'installation centrale possède un conteneur de traitement principal (10) et un conteneur de sédimentation (11) pour le liquide utilisé.

20. Dispositif selon la revendication 19, caractérisé en ce que l'installation centrale présente des autres conteneurs de sédimentation respectifs (13, 14) pour un agent de rinçage et pour l'eau.

21. Dispositif selon la revendication 19 ou 20, caractérisé en ce que le conteneur de traitement principal (10) présente un dispositif de séparation des parties en verre, en plastique et en métal, d'une part, et de la boue apparaissant lors de la conversion du métal ou de la vapeur métallique, d'autre part.

22. Dispositif selon l'une des revendications 18 à 21, caractérisé en ce qu'il possède un dispositif de tamisage (20) pour la séparation des parties en verre, en plastique et en métal.

23. Dispositif selon l'une des revendications 13 à 16, caractérisé en ce que la plaque (35) qui peut être relevée et abaissée dans le récipient (30) peut être relevée et abaissée par des moyens hydrauliques ou pneumatiques.

24. Dispositif selon la revendication 23, caractérisé en ce que le récipient (30) présente un couvercle (39) sur lequel est disposé un cylindre hydraulique ou pneumatique (31) dont la tige de piston (32) est reliée à la face supérieure de la plaque (35).

25. Dispositif selon l'une des revendications 13 à 16 et 23 à 24, caractérisé en ce que la plaque (35) présente au moins un évidement qui est en contact étanche avec un rail de guidage disposé sur le côté intérieur du récipient (30).

26. Dispositif selon la revendication 24 ou 25, caractérisé en ce que le couvercle (39) du récipient (30) est configuré en forme de chapeau, et peut être abaissé par rapport au récipient, en même temps que le cylindre hydraulique ou pneumatique (31) et que la plaque (35).

27. Dispositif selon l'une des revendications 10 à 26, caractérisé en ce que le récipient (30) est déplaçable.

28. Dispositif selon l'une des revendications 10 à 27, caractérisé en ce que le récipient (30) présente dans sa région inférieure une ouverture (raccord 46) pour l'extraction et le remplissage en liquide.

29. Dispositif selon l'une des revendications 25 à 28, caractérisé en ce que le couvercle (39) qui peut être abaissé peut être ouvert avec le soutien d'au moins un ressort (41) à gaz sous pression.

30. Dispositif selon l'une des revendications 13 à 29, caractérisé en ce que la plaque peut être pivotée vers le haut et vers le bas dans le récipient.

31. Dispositif selon l'une des revendications 13 à 30, caractérisé en ce que la plaque est configurée en forme de V et coopère avec un fond configuré en forme de V du récipient.

32. Dispositif selon l'une des revendications 10 à 31, caractérisé en ce que dans le récipient est disposé un dispositif pour le traitement par ultrasons (oscillateur immergé).
